# EUROPÄISCHE PATENTSCHRIFT

(11) **EP 3 421 398 B1**
(45) Veröffentlichungstag und Bekanntmachung des Hinweises auf die Patenterteilung: **31.03.2021**
(21) Anmeldenummer: 18179443.9
(22) Anmeldetag: 25.06.2018
(51) Int. Cl.: B65H 5/04, B41F 15/26, B42D 25/40, B42D 25/48, G06K 13/08

(54) **VORRICHTUNG ZUR AUFNAHME EINES DOKUMENTENKÖRPERS UND VERFAHREN ZUR KLEMMUNG ODER FREIGABE EINES DOKUMENTENKÖRPERS**
DEVICE FOR HOLDING A DOCUMENT BODY AND METHOD FOR CLAMPING OR UNBLOCKING A DOCUMENT BODY
DISPOSITIF DE RÉCEPTION D'UN CORPS DE DOCUMENT ET PROCÉDÉ DE SERRAGE OU DE LIBÉRATION D'UN CORPS DE DOCUMENT

(30) Priorität: 26.06.2017 DE 102017210732
(43) Veröffentlichungstag der Anmeldung: 02.01.2019
(73) Patentinhaber: Bundesdruckerei GmbH, 10969 Berlin (DE)
(72) Erfinder: Bosien, Andreas, 15712 Königs Wusterhausen (DE); Hoyer, Wolfgang, 83533 Edling (DE); Kirschbauer, Max, 93444 Bad Kötzting (DE)
(74) Vertreter: Patentanwälte Bressel und Partner mbB

(56) Entgegenhaltungen:
- EP-A1- 1 497 210
- EP-A2- 2 377 791
- DE-A1- 1 411 702
- GB-A- 171 605
- JP-A- H1 111 063
- US-A- 5 081 777

## Beschreibung

Die Erfindung betrifft eine Vorrichtung zur Aufnahme eines Dokumentenkörpers und ein Verfahren zur Klemmung oder Freigabe eines Dokumentenkörpers.

Die Herstellung von Dokumenten, insbesondere von Wert- und/oder Sicherheitsdokumenten, erfolgt in der Regel in mehreren Herstellungs- oder Prozessschritten. Ein Herstellungsschritt kann beispielsweise das Übertragen von Informationen auf eine RFID-Einrichtung im Dokumentenkörper sein. Ein weiterer Herstellungsschritt kann eine Laserbeschriftung des Dokumentkörpers sein. Für die und/oder während der Durchführung eines Herstellungsschritts kann es erforderlich sein, kann es erforderlich sein, ein Dokument sicher zu halten. Weiter kann es erforderlich sein, eine Position und/oder eine Orientierung eines gehaltenen Dokuments zu verändern, wobei in möglichst vielen Lagen ein sicherer Haltezustand für das Dokument herstellbar oder eine Freigabe eines gehaltenen Dokuments durchführbar sein sollte. Um Bauraum für eine entsprechende Halteeinrichtung zu reduzieren, ist es ebenfalls wünschenswert, die zur Halterung notwendigen Elemente platzsparend auszubilden und anzuordnen.

Die EP 2 733 099 B1 betrifft eine Laserindividualisierungsvorrichtung für Dokumente. In dem Dokument wird eine Dokumentenselektionseinrichtung beschrieben, welche mindestens zwei Sammeleinrichtungen umfasst, die auch als Magazine bezeichnet werden. Diese dienen zum Aufnehmen von Dokumenten. Weiter umfasst die Dokumentenselektionseinrichtung eine Aufnahmeöffnung zum Zuführen von vereinzelten Dokumenten und Dokumentenführungsmittel zum wahlweisen Leiten des zugeführten Dokuments zu einem der mindestens zwei Magazine. Weiter beschrieben wird ein Drehtisch.

Auch die EP 2 648 919 B1 beschreibt eine solche Laserindividualisierungsvorrichtung.

Weiter bekannt ist die DE 10 2013 100 981 A1. Diese betrifft einen Dokumentenpuffer zum Zugreifen auf drahtlos lesbare Schaltkreise von elektronisch auslesbaren Identifikationsdokumenten mit einer Mehrzahl von benachbarten Aufnahmefächern. Jedes Aufnahmefach ist für die Aufnahme von einem Identifikationsdokument vorgesehen. Dokumente in den Aufnahmefächern sind hierbei parallel zueinander angeordnet.

Die WO2013/126647 A1 offenbart Ausrüstung zum Verarbeiten von Plastikkarten, insbesondere ein Mechanismus zum Reorientieren der Plastikkarte. Die WO2013/126647 A1 beschreibt kein Koppelelement zur Kopplung von Klemmelementen.

Die EP 1 497 210 A1 offenbart einen Kartenhalter eines Kartendruckers.

Die GB 171 605 A offenbart eine Befestigungsvorrichtung für abnehmbare Rückseiten von Bilderrahmen.

Die US 5,081,777 A offenbart einen Bilderrahmen.

Die DE 14 11 702 A offenbart einen Aufzeichnungsträger.

Es stellt sich daher das technische Problem, eine Vorrichtung zur Aufnahme eines Dokumentenkörpers und ein Verfahren zur Klemmung oder Freigabe eines Dokumentenkörpers zu schaffen, welche eine sichere Halterung und eine zuverlässige Freigabe in verschiedenen Positionen und Orientierungen der Vorrichtung ermöglichen.

Die Lösung des technischen Problems ergibt sich durch die Gegenstände mit den Merkmalen der Ansprüche 1 und 13. Weitere vorteilhafte Ausgestaltungen der Erfindung ergeben sich aus den Unteransprüchen.

Vorgeschlagen wird eine Vorrichtung zur Aufnahme eines Dokumentenkörpers. Ein Dokumentenkörper kann insbesondere ein Dokumentenkörper eines Wert- und/oder Sicherheitsdokuments ein. Ein Dokumentenkörper kann weiter insbesondere ein sogenannter Dokumentenrohling sein. Ein solcher kann z.B. als Kunststoffkörper ausgebildet sein. Es ist jedoch selbstverständlich auch möglich, dass Dokumentenkörper auch weitere Materialien umfassen, beispielsweise Papier, Metallfolien, belichtete Hologramme oder aber auch insbesondere mikroelektronische Schaltkreise und Mikrochips.

Dokumentenkörper können bereits zumindest teilweise personalisiert und/oder individualisiert sein. Dies kann bedeuten, dass in dem Dokumentenkörper bereits Informationen enthalten oder in den Dokumentenkörper eingebracht sind, die spezifisch für eine zur Führung des Dokuments autorisierte Person sind. Selbstverständlich kann der Dokumentenkörper auch weitere Merkmale umfassen oder enthalten, insbesondere Sicherheitsmerkmale oder Sicherheitselemente. Sicherheits- und/oder Wertdokumente sind Dokumente, die mindestens ein Sicherheitsmerkmal aufweisen, welches eine Nachahmung, Verfälschung, ein Kopieren oder Ähnliches zumindest erschwert oder unmöglich macht. Als Wertdokumente können insbesondere Sicherheitsdokumente bezeichnet werden, die einen Wert verkörpern. Sicherheitsdokumente können beispielsweise Reisepässe, Personalausweise, Identifikationskarten, Zugangskarten, Führerscheine, Tickets, aber auch Verpackungen und Echtheitszertifikate sein. Wertdokumente können beispielsweise Postwertzeichen, Banknoten, Aktien, Zollmarken und Ähnliches sein.

Durch die Vorrichtung zur Aufnahme eines Dokumentenkörpers kann der Dokumentenkörper geklemmt werden, also durch Klemmen aufgenommen und gehalten werden. Eine Freigabe erfolgt durch das Auflösen der Klemmung.

Die Vorrichtung umfasst ein erstes Klemmelement und ein weiteres Klemmelement. Das erste Klemmelement kann hierbei z.B. als Unterteil und das weitere Klemmelement als Oberteil der Vorrichtung bezeichnet werden. Das erste und/oder das weitere Klemmelement weist/weisen (jeweils) mindestens eine Auflagefläche für den Dokumentenkörper auf. Insbesondere weist das erste und/oder das weitere Klemmelement (jeweils) mindestens eine Auflagefläche für einen Randbereich des Dokumentenkörpers auf. In diesem Fall kann in einer aufgenommenen oder sogar geklemmten Stellung des Dokumentenkörpers nur ein Randbereich einer Ober- oder Unterseite bzw. Vorder- oder Rückseite des Dokumentenkörpers, nicht jedoch die vollständige Ober- oder Unterseite bzw. Vorder- oder Rückseite auf der entsprechenden Auflagefläche aufliegen.

Das erste und das weitere Klemmelement sind beweglich aneinander befestigt. Dies bedeutet, dass das erste und das weitere Klemmelement relativ zueinander beweglich sind, wobei die beiden Klemmelemente über ein Koppelelement mechanisch miteinander verbunden sind. Auch sind das erste und das weitere Klemmelement in eine Klemmstellung bewegbar. Weiter sind das erste und das weitere Klemmelement in eine Freigabestellung bewegbar. Die Klemm- und Freigabestellung sind voneinander verschieden. In der Klemmstellung kann ein Dokumentenkörper zwischen den Klemmelementen geklemmt sein. In der Freigabestellung kann der Dokumentenkörper nicht zwischen den Klemmelementen geklemmt sein. In der Freigabestellung ist es jedoch möglich, dass der Dokumentenkörper oder ein Randbereich des Dokumentenkörpers auf einer Auflagefläche eines der beiden Klemmelemente aufliegt. In der Klemmstellung kann der Dokumentenkörper in einem Zwischenraum zwischen den Klemmelementen angeordnet und geklemmt sein. In der Freigabestellung kann der Dokumentenkörper in den Zwischenraum oder aus dem Zwischenraum bewegt werden.

Erfindungsgemäß ist mindestens ein bewegliches Koppelelement beweglich an dem ersten Klemmelement befestigt. Somit umfasst die Vorrichtung auch das bewegliche Koppelelement. Hierbei ist das bewegliche Koppelelement relativ zu dem ersten Klemmelement bewegbar. Insbesondere ist das bewegliche Koppelelement von einer ersten Position, die nachfolgend auch als Klemmposition bezeichnet werden kann, in eine weitere Position, die nachfolgend auch als Freigabeposition bezeichnet werden kann, bewegbar. Das Koppelelement dient zur mechanischen Kopplung bzw. Verbindung des ersten und des weiteren Klemmelements. Mit anderen Worten können das erste und das weitere Klemmelement über das Koppelelement miteinander mechanisch gekoppelt sein.

Das weitere Klemmelement kann ein mit dem Koppelelement wechselwirkendes Koppelelement aufweisen oder ausbilden.

Weiter sind das erste und das weitere Klemmelement derart gekoppelt, dass die Klemmelemente von der Klemmstellung in die Freigabestellung bewegt werden, wenn das Koppelelement von der ersten Position, also der Klemmposition, in die weitere Position, also die Freigabeposition, bewegt wird. Diese Bewegung kann auch als Freigabebewegung bezeichnet werden. Insbesondere kann bei dieser Bewegung eine entsprechende Betätigungskraft von dem Koppelelement auf die Klemmelemente, insbesondere auf das weitere Klemmelement, ausgeübt werden. Mit anderen Worten wird die Freigabebewegung durch eine Bewegung des Koppelelements bewirkt. Es können eine Vielzahl von Ausbildungen einer mechanischen Kopplung der Klemmelemente existieren, die das erläuterte Bewirken der Freigabebewegung durch die Bewegung des Koppelelements ermöglichen. Die Erfindung ist hierbei nicht auf eine spezielle Ausbildung begrenzt.

Weiter können das erste und das weitere Klemmelement derart gekoppelt sein, dass eine Bewegung der Klemmelemente von der Freigabestellung in die Klemmstellung freigegeben wird, wenn das Koppelelement von der weiteren Position in die erste Position bewegt wird. Ist diese Bewegung, die auch als Klemmbewegung bezeichnet werden kann, freigegeben, so können die Klemmelemente in die Klemmstellung versetzt werden. Diese Bewegung kann beispielsweise durch Federelemente bewirkt werden, die zwischen den Klemmelementen angeordnet sind. In diesem Fall kann die Klemmbewegung durch eine Bewegung des Koppelelements freigegeben werden.

Alternativ können das erste und das weitere Klemmelement derart gekoppelt sein, die Klemmelemente von der Freigabestellung in die Klemmstellung bewegt werden, wenn das Koppelelement von der weiteren Position, also der Freigabeposition, in die erste Position, also die Klemmposition, bewegt wird. Insbesondere kann bei dieser Bewegung eine entsprechende Betätigungskraft von dem Koppelelement auf die Klemmelemente, insbesondere auf das weitere Klemmelement, ausgeübt werden. In diesem Fall kann die Klemmbewegung durch eine Bewegung des Koppelelements bewirkt werden.

Die Bewegung der Klemmelemente relativ zueinander ist eine Linearbewegung. Dies kann bedeuten, dass das erste Klemmelement und/oder das weitere Klemmelement (jeweils) entlang einer linearen Bewegungstrajektorie bewegt werden, wenn diese in die Klemmstellung und/oder in die Freigabestellung versetzt werden.

Selbstverständlich kann die Vorrichtung, insbesondere ein Klemmelement oder beide Klemmelemente, Führungselemente zur Bewegungsführung der Klemmelemente aufweisen oder ausbilden. Weiter kann die Vorrichtung, insbesondere eines der Klemmelemente oder beide Klemmelemente, Führungselemente zur Führung der Bewegung des Koppelelements aufweisen oder ausbilden.

Weiter kann ein Klemmelement, insbesondere das erste Klemmelement, Anschlagelemente zur Begrenzung der Bewegung des Koppelelements aufweisen oder ausbilden. Die Freigabeposition und die Klemmposition des Koppelelements können insbesondere Endpositionen der Bewegungstrajektorie des Koppelelements sein. In einer solchen Endposition kann die Bewegung durch ein Anschlagelement begrenzt sein.

Das Koppelelement, welches nachfolgend noch näher erläutert wird, kann ein betätigbares Koppelelement sein. Durch eine Betätigung, beispielsweise eine manuelle oder aktorgestützte Betätigung, kann das Koppelelement beispielsweise von der Klemmposition in die Freigabeposition oder von der Freigabeposition in die Klemmposition bewegt werden.

Weiter kann bei der Bewegung der Klemmelemente in die Klemmstellung das Koppelelement durch zumindest eines der Klemmelemente von der weiteren Position des Koppelelements in die erste Position des Koppelelements verschoben werden. Es ist weiter möglich, dass bei der Bewegung der Klemmelemente in die Freigabestellung das Koppelelement nicht durch zumindest eines der Klemmelemente verschoben werden kann. Insbesondere kann es notwendig sein, das Koppelelement zur Bewegung von der Klemmposition in die Freigabeposition durch ein Betätigungselement zu betätigen, welches von den Klemmelementen verschieden ist.

Die beweglich aneinander befestigten Klemmelemente können drehbar gelagert sein, insbesondere an einer Halteeinrichtung. Dies wird nachfolgend noch näher erläutert. Folgend kann auf eine Vertikalrichtung Bezug genommen werden, wobei eine Vertikalrichtung senkrecht zu einer Auflagefläche eines der Klemmelemente oder senkrecht zu den Auflageflächen beider Klemmelemente orientiert sein kann. Eine Drehachse kann hierbei wiederum senkrecht zu der Vertikalrichtung orientiert sein, insbesondere parallel oder konzentrisch zu einer Querrichtung. Eine Längsrichtung kann wiederum senkrecht zur Querrichtung und zur Vertikalrichtung orientiert sein. Die Richtungen können ein vorrichtungsfestes Bezugskoordinatensystem oder ein in Bezug auf das erste Klemmelement klemmelementfestes Bezugskoordinatensystem bilden. Hierbei kann ein Dokument entlang der oder entgegen der Längsrichtung zwischen die Klemmelemente eingeführt oder aus dem Zwischenraum ausgeführt werden (Einführ- und Ausführbewegung).

Das erste Klemmelement kann eine Lagereinrichtung für einen Lagerabschnitt des Koppelelements aufweisen. Weiter kann das Koppelelement den Lagerabschnitt aufweisen. Der Lagerabschnitt des Koppelelements kann insbesondere zylinderförmig ausgebildet sein. In diesem Fall kann der Lagerabschnitt des ersten Klemmelements hohlzylinderförmig ausgebildet sein, wobei der Lagerabschnitt des Koppelelements im hohlzylinderförmigen Abschnitt gleiten kann. Weiter kann das Koppelelement ein Kraftübertragungselement zur Übertragung einer Betätigungskraft von dem Betätigungselement auf das Koppelelement aufweisen oder ausbilden. Dieses Kraftübertragungselement kann auch als Kraftübertragungsabschnitt ausgebildet sein. Weiter kann das Koppelelement ein weiteres Kraftübertragungselement zur Übertragung einer Kraft von dem Koppelelement auf das weitere Klemmelement aufweisen oder ausbilden. Auch dieses Kraftübertragungselement kann als Kraftübertragungsabschnitt ausgebildet sein.

Das Koppelelement kann an einer Längsseite des ersten Klemmelements angeordnet sein. Eine Längsseite kann hierbei eine Seite sein, die sich parallel zu der Längsrichtung erstreckt.

Weiter kann die Vorrichtung, insbesondere das erste Klemmelement, ein weiteres Federelement aufweisen, wobei das Federelement derart ausgebildet und/oder angeordnet ist, dass zumindest in der Freigabeposition des Koppelelements eine Federkraft zur Bewegung des Koppelelements in der Richtung von der Freigabeposition zur Klemmposition auf das Koppelelement ausgeübt wird. Selbstverständlich kann eine solche Federkraft auch an Positionen zwischen der Klemm- und der Freigabeposition und gegebenenfalls auch in der Klemmposition durch das Federelement auf das Koppelelement ausgeübt werden. Durch eine derartige Federkraft kann das Koppelelement, insbesondere ein Kraftübertragungselement, an ein Betätigungselement angepresst werden, insbesondere bei einer Bewegung des Koppelelements von der Klemm- in die Freigabeposition.

Die Ausbildung der vorgeschlagenen Vorrichtung derart, dass die Klemmelemente durch die Betätigung eines beweglichen Koppelelementes von einer Klemmstellung in die Freigabestellung bewegt werden können, ermöglicht in vorteilhafter Weise eine zuverlässige Freigabe des Dokumentenkörpers, aufgrund der mechanischen Kopplung über das Koppelelement. Durch die Freigabe oder sogar das Bewirken der Klemmbewegung durch Betätigen des beweglichen Koppelelements wird auch ein zuverlässiges Klemmen ermöglicht. Das Klemmen und Freigeben wird, da das Koppelelement an dem ersten Klemmelement befestigt ist, in jeder Position und Orientierung des Klemmelements ermöglicht. Ebenfalls kann durch die mechanische Kopplung eine Komplexität des Betriebs der Klemmelemente verringert werden. Weiter können Bauraumanforderungen für die Vorrichtung reduziert werden, da die mechanische Kopplung über das Koppelelement keine hohen Bauraumanforderungen stellt.

Die vorgeschlagene Vorrichtung kann Bestandteil einer Vorrichtung zum Transport des Dokumentenkörpers sein. Auch kann die vorgeschlagene Vorrichtung Bestandteil einer Vorrichtung zur Herstellung eines Dokuments, insbesondere eines Wert-und oder Sicherheitsdokuments, sein. Eine Vorrichtung zur Herstellung bzw. eine Vorrichtung zum Transport kann hierbei neben der vorgeschlagenen Vorrichtung zur Aufnahme des Dokumentenkörpers mindestens eine Beleuchtungseinrichtung zur Beleuchtung des geklemmten Dokumentenkörpers und/oder mindestens eine Antennenstruktur zur Übertragung von Informationen zu dem Dokumentenkörper und/oder mindestens eine Leseeinrichtung, insbesondere eine RFID-Leseeinrichtung, zum Auslesen von Informationen aus dem Dokumentenkörper und/oder mindestens einen Teil einer Lasereinrichtung zur laserbasierten Beschriftung des Dokumentenkörpers, insbesondere des geklemmt Dokumentenkörpers, umfassen. Weiter kann die Vorrichtung mindestens eine Dokumenten-Aufnahmeeinrichtung umfassen, wobei die Dokumenten-Aufnahmeeinrichtung mindestens zwei Aufnahmefächer aufweist oder ausbildet, wobei ein Aufnahmefach eine Einführöffnung und eine Ausführöffnung aufweist, wobei die Dokumenten-Aufnahmeeinrichtung mindestens ein Mittel zum Öffnen und Schließen der Ausführöffnung umfasst, wobei die Aufnahmefächer der Dokumenten-Aufnahmeeinrichtung schräg zueinander orientiert sind. Hierbei können die Dokumenten-Aufnahmeeinrichtung und die an der Halteeinrichtung befestigten Klemmelemente derart zueinander angeordnet sein, dass ein Dokumentenkörper aus einem der Aufnahmefächer in einer aufnahmefachspezifischen Einführdrehlage zwischen die Klemmelemente eingeführt werden kann. Weiter kann die Vorrichtung mindestens eine Ausgabeeinrichtung mit mindestens einem Ausgabefach umfassen. Hierbei können die Ausgabeeinrichtung und die an der Halteeinrichtung befestigten Klemmelemente derart zueinander angeordnet sein, dass ein Dokumentenkörper, der zwischen den Klemmelementen angeordnet ist, in einer vorbestimmten ausgabefachspezifischen Ausgabedrehlage der Klemmelemente aus dem Zwischenraum zwischen den Klemmelementen in das Ausgabefach bewegt werden kann. Die vorgeschlagene Vorrichtung kann einen Drehtisch für einen Dokumentenkörper ausbilden.

In einer weiteren Ausführungsform ist mindestens ein Federelement an einem der Klemmelemente befestigt. Vorzugsweise ist das Federelement an beiden Klemmelementen befestigt. Weiter übt das Federelement in der Freigabestellung eine Federkraft zur Bewegung der Klemmelemente in die Klemmstellung auf die Klemmelemente aus. Mit anderen Worten kann das mindestens eine Federelement in der Freigabestellung vorgespannt sein, wobei die Federkraft derart orientiert ist, dass die Klemmelemente in die Klemmstellung bewegt werden, wenn diese Klemmbewegung freigegeben ist, insbesondere nicht durch ein Anschlagelement gesperrt ist.

Die Bewegung der Klemmelemente in die Klemmstellung (Klemmbewegung) wird freigegeben, wenn das bewegliche Koppelelement von der Freigabeposition in die Klemmposition bewegt wird. In der Freigabeposition kann das bewegliche Koppelelement ein Anschlagelement bilden, welches die Klemmbewegung verhindert.

Mit anderen Worten können also die Klemmelemente durch eine Betätigung des Koppelelements derart, dass das Koppelelement von der Klemmposition in die Freigabeposition bewegt wird, von der Klemmstellung in die Freigabestellung versetzt werden. Wird dann das Koppelelement wieder in die Klemmposition bewegt, so kann die Klemmbewegung der Klemmelemente freigegeben werden, wobei die Federkraft des mindestens einen Federelements die Klemmbewegung bewirkt.

Hierdurch ergibt sich in vorteilhafter Weise ein einfaches und zuverlässig wiederholbares Klemmen eines Dokumentenkörpers.

In einer weiteren Ausführungsform weist die Vorrichtung mindestens einen Betätigungsabschnitt zur Betätigung des Koppelelements durch ein Betätigungselement auf. Hierbei ist das Koppelelement durch eine Betätigung mittels des Betätigungselements von der ersten Position in die weitere Position bewegbar.

Der Betätigungsabschnitt kann insbesondere derart angeordnet und/oder ausgebildet werden, dass dieser die Betätigung des Koppelelements durch das Betätigungselement ermöglicht, insbesondere eine reproduzierbare Betätigung. Bei der Betätigung erfolgt eine Wechselwirkung zwischen dem Betätigungselement und dem Koppelelement, nämlich eine Kraftübertragung von dem Betätigungselement auf das Koppelelement. Beispielsweise kann das Betätigungselement entlang einer Betätigungstrajektorie in den oder entlang des Betätigungsabschnitt(s) bewegt werden. Bei der Bewegung entlang der Betätigungstrajektorie, die auch als Betätigungsbewegung bezeichnet werden kann, entlang einer Betätigungsrichtung kann das Koppelelement durch das Betätigungselement betätigt werden.

Bei einer Bewegung entlang der Betätigungstrajektorie entgegen der Betätigungsrichtung kann das Betätigungselement aus dem oder ebenfalls entlang des Betätigungsabschnitt(s) bewegt werden. Bei dieser Bewegung kann eine Bewegung des Koppelelements von der Freigabeposition in die Klemmposition freigegeben oder aber auch bewirkt werden. Diese Bewegung kann dann aufgrund der vorhergehend erläuterten Federkräfte bewirkt werden, wodurch von dem weiteren Klemmelement eine Betätigungskraft auf das Koppelelement ausgeübt wird, die dann zur Bewegung von der Freigabeposition in die Klemmposition führt.

Der Betätigungsabschnitt kann an einer Längsseite des ersten Klemmelements und/oder an einer Längsseite des weiteren Klemmelements angeordnet sein.

Es können eine Vielzahl von Ausbildungen eines Betätigungsabschnitts existieren, die das erläuterte Betätigen des Koppelelements durch das Betätigungselement ermöglichen. Die Erfindung ist hierbei nicht auf eine spezielle Ausbildung begrenzt. Vorzugsweise kann der Betätigungsabschnitt jedoch durch eine Öffnung oder Ausnehmung des Klemmelements/der Klemmelemente, insbesondere an einer Längsseite des Klemmelements/der Klemmelemente, ausgebildet sein. Das Betätigungselement kann von außen in das Klemmelement/die Klemmelemente eingeführt werden. Vorzugsweise kann der Betätigungsabschnitt durch eine Ausnehmung an einer Oberseite, insbesondere einer Oberseite einer Längsseite, des ersten Klemmelements und/oder durch eine Ausnehmung an einer Unterseite, insbesondere einer Unterseite der Längsseite, ausgebildet sein. Hierbei bezeichnet eine Oberseite des ersten Klemmelements eine dem weiteren Klemmelement zugewandte Seite des ersten Klemmelements. Weiter bezeichnet eine Unterseite des weiteren Klemmelements eine dem ersten Klemmelement zugewandte Seite des weiteren Klemmelements.

Die Betätigungstrajektorie kann durch die Ausbildung des Betätigungsabschnitts festgelegt werden. Insbesondere kann die Betätigungstrajektorie eine lineare Trajektorie sein. Hierdurch ergibt sich in vorteilhafter Weise eine einfache und zuverlässige Betätigung des Koppelelements durch ein Betätigungselement.

In einer weiteren Ausführungsform weist das Koppelelement einen ersten Betätigungsabschnitt zur Betätigung durch ein Betätigungselement auf oder bildet diesen aus. Wie vorhergehend erläutert, kann dieser Betätigungsabschnitt durch ein Kraftübertragungselement ausgebildet sein. Weiter ist das Koppelelement durch eine Betätigung durch das Betätigungselement von der ersten Position in die weitere Position bewegbar. Insbesondere kann das Betätigungselement das Koppelelement über den Betätigungsabschnitt betätigen, wenn das Betätigungselement in der Betätigungsrichtung entlang der Betätigungstrajektorie geführt wird.

Weiter weist das Koppelelement mindestens einen weiteren Betätigungsabschnitt zur Betätigung des weiteren Klemmelements auf oder bildet diesen aus.

Die Betätigungsabschnitte sind, wie vorhergehend erläutert, als Kraftübertragungselemente oder -abschnitte ausgebildet sein. Hierbei dient der erste Betätigungsabschnitt zur Übertragung einer Kraft von dem Betätigungselement auf das Koppelelement dienen. Der weitere Betätigungsabschnitt dient zur Übertragung einer Kraft von dem Koppelelement auf das weitere Klemmelement. Selbstverständlich kann der weitere Betätigungsabschnitt auch zur Übertragung einer Kraft von dem weiteren Klemmelement auf das Koppelelement dienen.

Der erste Betätigungsabschnitt und/oder der weitere Betätigungsabschnitt kann eine Lagereinrichtung umfassen oder als Lagereinrichtung ausgebildet sein. Beispielsweise kann ein Betätigungsabschnitt ein Kugellager oder Gleitlager umfassen oder als solches ausgebildet sein.

So kann z.B. eine Lagereinrichtung derart an dem Koppelelement angeordnet sein, dass das Betätigungselement mit der Betätigungsbewegung entlang der oder durch die Lagereinrichtung bewegt werden kann. Hierdurch wird eine zuverlässige Bewegungsführung und Kraftübertragung bei der Bewegung des Betätigungselements entlang der Betätigungstrajektorie ermöglicht.

In einer weiteren Ausführungsform weist das weitere Klemmelement einen Betätigungsabschnitt zur Betätigung durch das Koppelelement auf oder bildet diesen aus. Hierbei umfasst der Betätigungsabschnitt eine Fläche, deren Normalenvektor einen Anteil aufweist, der parallel zur Bewegungsrichtung des Koppelelements bei der Bewegung von der Freigabe- in die Klemmposition orientiert ist, sowie einen weiteren Anteil umfasst, der parallel zur Bewegungsrichtung der Klemmelemente bei der Klemmbewegung orientiert ist. Alternativ oder kumulativ kann ein Normalenvektor der Fläche zumindest einen Anteil aufweisen, der nicht parallel zur vorhergehend erläuterten Vertikalrichtung orientiert ist.

Dieser Betätigungsabschnitt des weiteren Koppelelements kann hierbei mit dem vorhergehend erläuterten weiteren Betätigungsabschnitt des Koppelelements wechselwirken. Insbesondere kann also der Betätigungsabschnitt des weiteren Klemmelements einen Kraftübertragungsabschnitt zur Übertragung der Kraft von dem Koppelelement auf das weitere Klemmelement sein. Die Fläche kann hierbei als Gleitfläche für das Koppelelement, insbesondere für den weiteren Betätigungsabschnitt des Koppelelements, ausgebildet sein.

Es kann eine Vielzahl von Ausbildungen eines Betätigungsabschnitts des weiteren Klemmelements existieren, die das erläuterte Betätigen des weiteren Klemmelements durch den weiteren Betätigungsabschnitt des Koppelelements ermöglichen. Die Erfindung ist hierbei nicht auf eine spezielle Ausbildung begrenzt. Vorzugsweise kann der Betätigungsabschnitt jedoch durch eine Öffnung oder Ausnehmung des weiteren Klemmelements, insbesondere an einer Längsseite des weiteren Klemmelements, ausgebildet sein. Der weitere Betätigungsabschnitt des Koppelelements kann hierbei in diese Öffnung oder Ausnehmung hineinragen. Vorzugsweise kann der Betätigungsabschnitt des weiteren Klemmelements durch eine Ausnehmung an einer Unterseite, insbesondere einer Unterseite der Längsseite, ausgebildet sein.

Vorzugsweise, aber nicht zwingend, verringert sich eine Tiefe der Ausnehmung entlang der Vertikalrichtung entlang einer Richtung, die von der Klemmposition zur Freigabeposition des Koppelelements orientiert ist, welches das weitere Klemmelement über den Betätigungsabschnitt betätigt.

Hierdurch ergibt sich in vorteilhafter Weise, eine mechanisch mehrfach bereitzustellende Übersetzung der Bewegung des Koppelelements in die Bewegung der Klemmelemente.

In einer weiteren Ausführungsform weist/weisen das erste Klemmelement und/oder das weitere Klemmelement (jeweils) einen Rahmenabschnitt auf oder bilden diesen aus. Der Rahmenabschnitt weist eine Durchgangsöffnung auf oder bildet diese aus.

Es ist auch vorstellbar, dass das erste Klemmelement und/oder das weitere Klemmelement als Rahmenelemente ausgebildet sind und neben dem Rahmenabschnitt keine weiteren Abschnitte aufweisen. Allerdings können die Klemmelemente jeweils noch mindestens einen Einführabschnitt und/oder einen Ausführabschnitt aufweisen oder ausbilden.

Eine zentrale Mittellinie der Durchgangsöffnung, die auch als Symmetrieachse der Durchgangsöffnung bezeichnet werden kann, kann parallel zur Vertikalrichtung orientiert sein.

Es ist möglich, dass die Auflageflächen für den Dokumentenkörper die Durchgangsöffnung begrenzen, also am Rand der Durchgangsöffnung angeordnet sind. Auch können die Auflagefläche oder Teile davon die Durchgangsöffnung umgeben.

Hierdurch wird in vorteilhafter Weise ermöglicht, dass ein durch die Klemmelemente geklemmter Dokumentenkörper, insbesondere Teile von dessen Oberseite bzw. Vorderseite und/oder Unterseite bzw. Rückseite, auch im geklemmten Zustand von außen zugänglich sind. Insbesondere kann, auch im geklemmten Zustand, eine Laserbeschriftung der Oberseite bzw. Vorderseite und/oder der Unterseite bzw. Rückseite durch die Durchgangsöffnung hindurch erfolgen.

In einer weiteren Ausführungsform weist/weisen das erste Klemmelement und/oder das weitere Klemmelement (jeweils) einen Einführabschnitt und einen Ausführabschnitt auf oder bilden diesen/diese aus. Der Einführabschnitt dient zur Einführung eines Dokumentenkörpers in eine Klemmlage des Dokumentenkörpers zwischen den Klemmelementen. Der Ausführabschnitt dient zum Ausführen des Dokumentenkörpers aus dieser Klemmlage.

Vorzugsweise sind der Einführabschnitt und/oder der Ausführabschnitt (jeweils) U-profilförmig ausgebildet. Hierbei kann ein solcher Abschnitt zwei Schenkel aufweisen. Eine Grundseite des U-profilförmigen Abschnitts kann durch einen Rahmenteilabschnitt eines Klemmelements ausgebildet werden. Insbesondere können sich die Schenkel des U-profilförmigen Abschnitts entlang oder parallel zur Längsrichtung von dem Rahmenabschnitt weg erstrecken.

Vorzugsweise entspricht der Einführabschnitt dem Ausführabschnitt.

Ein Ein- und/oder Ausführabschnitt kann jeweils mindestens eine Gleitfläche zur Führung mit einer Einführbewegung bzw. einer Ausführbewegung des Dokumentenkörpers aufweisen oder ausbilden. Ein Normalenvektor einer solchen Gleitfläche kann insbesondere parallel zur Vertikalrichtung orientiert sein.

Es kann möglich sein, dass der Dokumentenkörper aus oder von einer Transportvorrichtung für den Dokumentenkörper, insbesondere von oder aus einer Dokumenten-Aufnahmeeinrichtung, in die Klemmlage, die auch als Befestigungslage bezeichnet werden kann, bewegt wird. Das Vorsehen eines Ein- und Ausführabschnitts ermöglicht in vorteilhafterweise eine zuverlässige Bewegungsführung bei dieser Bewegung in die Klemmlage und aus der Klemmlage heraus. Weiter kann es möglich sein, dass der Dokumentenkörper von der vorgeschlagenen Vorrichtung aus der Klemmlage heraus weiter transportiert werden soll, beispielsweise zu einer weiteren Transport- oder Aufnahmeeinrichtung. Hierzu kann der Dokumentenkörper aus der Klemmlage zwischen den beiden Klemmelementen, insbesondere zwischen den Rahmenabschnitten der Klemmelemente, herausbewegt werden. In der Klemmlage kann ein Schritt zur Herstellung des Dokumentenkörpers durchgeführt werden, z.B. eine Laserbeschriftung.

In einer weiteren Ausführungsform umfasst die Vorrichtung mindestens ein bewegliches Betätigungselement. Weiter ist das Koppelelement durch eine Betätigungsbewegung des Betätigungselements betätigbar. Dies wurde vorhergehend bereits erläutert. Insbesondere kann das Koppelelement durch Betätigungsbewegung in einer Betätigungsrichtung des Betätigungselements betätigt werden. Bei dieser Bewegung kann von dem Betätigungselement eine Betätigungskraft auf das Koppelelement ausgeübt werden, insbesondere über aneinander anliegende Abschnitte bzw. Flächen der Elemente. Diese Kraft kann insbesondere derart ausgeübt werden, dass das Koppelelement von der Klemm- in die Freigabeposition bewegt wird. Hierbei kann eine Orientierung der Betätigungstrajektorie zumindest teilweise, vorzugsweise vollständig, von einer Orientierung der Bewegungstrajektorie des Koppelelements verschieden sein. Sind beide Bewegungen Linearbewegungen, so können die Trajektorien insbesondere senkrecht zueinander orientiert sein. Es ist beispielsweise vorstellbar, dass die Bewegungstrajektorie der Betätigungsbewegung parallel zur erläuterten Querrichtung und die Trajektorie der Bewegung des Koppelelements parallel zur Längsrichtung orientiert ist.

Das bewegliche Betätigungselement kann insbesondere stab- oder zapfenförmig ausgebildet sein. Hierbei kann zumindest ein Teilabschnitt einer Oberfläche des Betätigungselementes bei der Betätigungsbewegung an einem Betätigungsabschnitt des Koppelelements, insbesondere dem ersten Betätigungsabschnitt, entlang gleiten.

Hierdurch wird eine einfache und zuverlässige Übertragung der Betätigungskraft erreicht.

In einer weiteren Ausführungsform weist das Betätigungselement zumindest einen sich verjüngenden Abschnitt auf oder bildet diesen aus. Vorzugsweise ist dieser sich verjüngende Abschnitt an einem ersten Ende des Betätigungselements angeordnet, wobei dieses erste Ende ein entlang der Betätigungsrichtung vorderes Ende des Betätigungselements sein kann. Hierbei kann sich der verjüngende Abschnitt hin zum vorderen Ende verjüngen. Wird bei einer Betätigungsbewegung das Betätigungselement entlang der Betätigungstrajektorie bewegt und liegt eine Oberfläche des Koppelelements, insbesondere des ersten Betätigungsabschnitts, an der Oberfläche des sich verjüngenden Abschnitts an, so kann das Koppelelement aufgrund der Änderung des Durchmessers des Betätigungselements bei der Bewegung, der mit dem Koppelelement wechselwirkt, verschoben werden.

Hierdurch ergibt sich in vorteilhafter Weise eine einfache und zuverlässige Betätigung des Koppelelements.

Weiter beschrieben wird, dass die Vorrichtung mindestens eine Antriebseinrichtung für das bewegliche Betätigungselement umfasst. Weiter kann die Vorrichtung Elemente zur mechanischen Kopplung der Antriebseinrichtung mit dem beweglichen Betätigungselement umfassen. Hierbei kann die Antriebseinrichtung derart ausgebildet und/oder mit dem beweglichen Betätigungselement gekoppelt sein, dass das Betätigungselement zumindest in Betätigungsrichtung entlang der Betätigungstrajektorie durch die Antriebseinrichtung bewegbar ist. Die Antriebseinrichtung kann hierbei vorzugsweise eine pneumatische Antriebseinrichtung sein. Hierdurch ergibt sich in vorteilhafter Weise eine gute Einbindung in ein übergeordnetes System, welches ein Pneumatiksystem umfassen kann. Insbesondere kann dann eine pneumatische Verbindung der pneumatischen Antriebseinrichtung zu dem Pneumatiksystem hergestellt werden. Das übergeordnete System kann z.B. zumindest ein Teil der vorhergehend erläuterten Vorrichtung zur Herstellung eines Dokuments sein oder diese umfassen.

Selbstverständlich kann die Antriebseinrichtung aber auch eine elektrische oder andersartig ausgebildete Antriebseinrichtung sein. Es ist weiter möglich, dass die Antriebseinrichtung kraftlos geschaltet werden kann, insbesondere um eine Bewegung des Betätigungselements entgegen der Betätigungsrichtung entlang der Betätigungstrajektorie freizugeben, beispielsweise wenn die Klemmelemente von der Freigabestellung in die Klemmstellung bewegt werden.

In einem kraftlosen Zustand kann somit eine Bewegung des Betätigungselements entgegen der Betätigungsrichtung freigegeben werden. Selbstverständlich ist es auch möglich, dass die Antriebseinrichtung derart ausgebildet und/oder mit dem Betätigungselement gekoppelt ist, dass durch die Antriebseinrichtung eine Antriebskraft zur Bewegung des Betätigungselements entgegen der Betätigungsrichtung auf das Betätigungselement ausgeübt werden kann.

Die Antriebseinrichtung kann vorzugsweise an der vorhergehend erläuterten Halteeinrichtung für die Klemmelemente befestigt sein.

Hierdurch ergibt sich in vorteilhafter Weise eine vereinfachte Bedienung der Vorrichtung, da eine Betätigung des Betätigungselements und somit ein Versetzen der Klemmelemente in den Klemmzustand durch eine Steuerung der Antriebseinrichtung erfolgen kann.

In einer bevorzugten Ausführungsform umfasst die Vorrichtung eine Halteeinrichtung für die Klemmelemente, wobei die Klemmelemente drehbar an der Halteeinrichtung gelagert sind. Weiter ist es möglich, dass auch das Betätigungselement drehbar an der Halteeinrichtung für die Klemmelemente gelagert sein kann. Insbesondere kann die Halteeinrichtung derart ausgebildet sein, dass die Klemmelemente um 360° rotierbar an der Halteeinrichtung gelagert sind. Hierdurch wird in vorteilhafter Weise ermöglicht, einen geklemmten Dokumentenkörper in verschiedene Orientierungen zu versetzen, insbesondere durch Verdrehen der Klemmelemente in der Klemmstellung. Dies wiederum ermöglicht in vorteilhafter Weise, dass z.B. durch eine Laserbeschriftungseinrichtung verschiedene Teilbereiche des Dokumentenkörpers beschriftet werden können. Auch kann ein Teilbereich mit verschiedenen Orientierungen (Einfallswinkeln) des Laserstrahls beschriftet werden, wobei diese durch Verdrehen der Klemmelemente eingestellt werden.

In einer weiter bevorzugten Ausführungsform sind die Klemmelemente derart an der Halteeinrichtung befestigt bzw. gelagert, dass eine durch den Betätigungsabschnitt festgelegte Betätigungstrajektorie konzentrisch zur Rotationsachse der Klemmelemente verläuft. Mit anderen Worten verläuft die Betätigungstrajektorie für die Betätigungsbewegung und entgegen der Betätigungsrichtung entlang der Rotationsachse der Klemmelemente. Es ist weiter möglich, dass auch eine Längsachse des Betätigungselementes konzentrisch zur Rotationsachse angeordnet ist. Die Längsachse kann insbesondere auch eine Symmetrieachse des Betätigungselements sein.

Hierdurch ergibt sich in vorteilhafter Weise, dass das Betätigungselement in jeder Rotationslage der Klemmelemente die Betätigungsbewegung durchführen kann, ohne dass sich die Lage und Orientierung der Längsachse des Betätigungselements verändern muss.

Weiter beschrieben wird, dass die Vorrichtung mindestens eine Antriebseinrichtung für eine Drehbewegung der Klemmelemente umfasst. Weiter kann die Vorrichtung Elemente zur mechanischen Kopplung dieser Antriebseinrichtung mit den Klemmelementen umfassen. Insbesondere kann die mechanische Kopplung über einen Riemen erfolgen.

Weiter ist es möglich, dass die Vorrichtung eine Einrichtung zur Erfassung einer Drehposition bzw. eines Drehwinkels der Klemmelemente umfasst. Dieser kann auch als Positionssensor oder Encoder bezeichnet werden. Auch diese Einrichtung zur Erfassung kann über Elemente mit den Klemmelementen mechanisch verbunden sein, beispielsweise ebenfalls über mindestens einen Riemen.

Hierdurch werden in vorteilhafter Weise ein vereinfachter Betrieb und eine hochgenaue Positionierung der Klemmelemente und somit auch eines geklemmten Dokumentenkörpers ermöglicht.

In einer weiteren Ausführungsform umfasst die Vorrichtung eine weitere Halteeinrichtung, wobei die Halteeinrichtung zur Halterung der Klemmelemente drehbar an der weiteren Halteeinrichtung gelagert ist. Beispielsweise kann die weitere Halteeinrichtung als Drehtisch ausgebildet sein oder einen solchen Drehtisch umfassen. Auf dem Drehtisch wiederum kann die Halteeinrichtung für die Klemmelemente befestigt sein. Drehachsen der Halteeinrichtung zur Halterung der Klemmelemente und der weiteren Halteeinrichtung können hierbei senkrecht zueinander orientiert sein. Hierdurch wird in vorteilhafter Weise ermöglicht, dass ein geklemmter Dokumentenkörper mit mehr Freiheitsgraden lageverändert werden kann. Dies wiederum ermöglicht z.B. die Laserbeschriftung weiterer Teilbereiche einer Dokumentenkörperoberfläche oder die Beschriftung mit weiteren Orientierungen (Einfallswinkeln).

Weiter beschrieben wird, dass die Vorrichtung mindestens eine Einrichtung zur Detektion eines aufgenommenen Dokumentenkörpers umfasst. Ein Dokumentenkörper kann hierbei in einer Klemmstellung der Klemmelemente oder aber auch in einer Freigabestellung zwischen den Klemmelementen aufgenommen sein. Die Einrichtung zur Detektion kann beispielsweise eine optische Einrichtung sein. So ist es z.B. möglich, mittels der Einrichtung zur Detektion zu detektieren, ob ein Dokumentenkörper zwischen die Klemmelemente angeordnet ist. Ist dies der Fall, so kann ein Klemmsignal erzeugt werden, wobei die Klemmelemente in Abhängigkeit eines erzeugten Klemmsignals in die Klemmstellung bewegt werden.

Weiter vorgeschlagen wird ein Verfahren zur Klemmung oder Freigabe eines Dokumentenkörpers mittels einer Vorrichtung gemäß einer der in dieser Offenbarung offenbarten Ausführungsformen. Bei dem Verfahren wird das Koppelelement von der ersten Position in die weitere Position bewegt, um die Klemmelemente in eine Freigabestellung zu versetzen. Alternativ wird das Koppelelement von der weiteren Position in die erste Position bewegt, um die Klemmelemente in eine Klemmstellung zu versetzen.

In der Freigabestellung kann die Klemmung eines eingeklemmten Dokumentenkörpers aufgehoben sein. Weiter kann in der Freigabestellung ein Dokumentenkörper aus dem Zwischenraum zwischen den Klemmelementen ausgeführt oder in diesen Zwischenraum eingeführt werden. In der Klemmstellung kann ein Dokumentenkörper zwischen den Klemmelementen geklemmt sein.

Hierdurch ergibt sich in vorteilhafter Weise ein einfaches und zuverlässiges Befestigen und Freigeben des Dokumentenkörpers.

In einer weiteren Ausführungsform wird das Koppelelement durch Betätigung durch ein Betätigungselement von der ersten Position in die weitere Position bewegt. Hierdurch kann der beklemmte Dokumentenkörper freigegeben werden.

Wie vorhergehend erläutert ist es vorstellbar, dass das Koppelelement durch Betätigung durch ein Betätigungselement auch von der weiteren Position in die erste Position bewegt wird. Vorzugsweise wird jedoch eine Bewegung des Koppelelements von der weiteren Position in die erste Position durch eine Bewegung des Betätigungselements freigegeben.

Es ist möglich, die Bewegung des Koppelelements zu steuern, insbesondere durch eine Steuerung der Bewegung des Betätigungselements.

In einer weiteren Ausführungsform wird das Betätigungselement entlang einer Betätigungstrajektorie bewegt, insbesondere in einer Betätigungsrichtung. Weiter betätigt das Betätigungselement bei der Bewegung entlang der Bewegungstrajektorie das Koppelelement.

Die vorgeschlagene Vorrichtung ist hierbei derart ausgebildet, dass ein Verfahren gemäß einer der in dieser Offenbarung offenbarten Ausführungsformen mittels der Vorrichtung durchführbar ist.

Die Erfindung wird anhand von Ausführungsbeispielen näher erläutert. Die Figuren zeigen.
- Fig. 1: eine perspektivische Ansicht einer erfindungsgemäßen Vorrichtung,
- Fig. 2: eine Seitenansicht einer erfindungsgemäßen Vorrichtung,
- Fig. 3: ein Querschnitt durch das erste Klemmelement,
- Fig. 4: eine Draufsicht auf eine erfindungsgemäße Vorrichtung,
- Fig. 5: eine perspektivische Ansicht einer Haltevorrichtung,
- Fig. 6: ein Querschnitt durch eine erfindungsgemäße Haltevorrichtung und
- Fig. 7: eine Seitenansicht einer erfindungsgemäßen Haltevorrichtung.

Nachfolgend bezeichnen gleiche Bezugszeichen Elemente mit gleichen oder ähnlichen technischen Merkmalen.

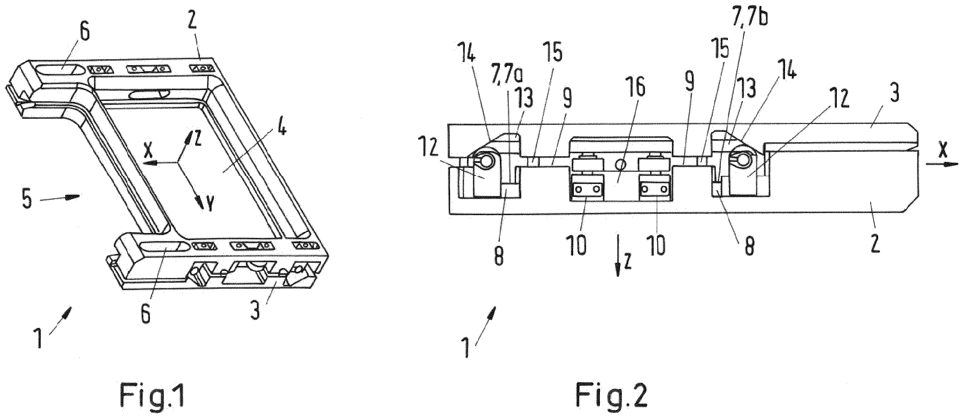

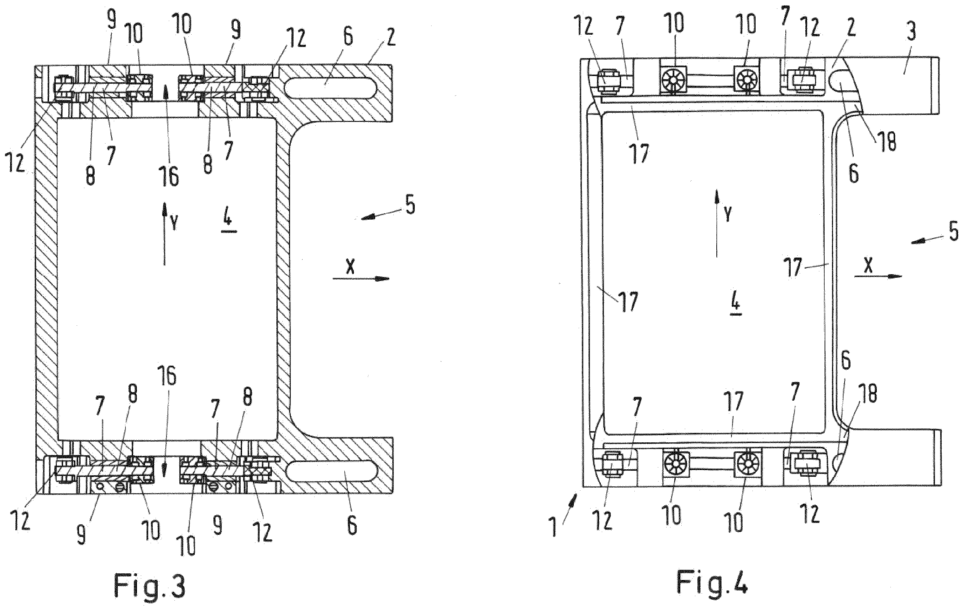

In Fig. 1 ist eine erfindungsgemäße Vorrichtung 1 zur Aufnahme eines Dokumentenkörpers (nicht dargestellt) in einer perspektivischen Ansicht gezeigt. Die Vorrichtung 1 umfasst ein erstes Klemmelement 2 und ein weiteres Klemmelement 3. Die Klemmelemente sind hierbei mechanisch miteinander verbunden. Hierbei sind die Klemmelemente 2, 3 derart mechanisch miteinander verbunden, dass diese entlang einer Vertikalrichtung z relativ zueinander bewegt werden können. Die Klemmelemente 2, 3 weisen jeweils Auflageflächen 17 (siehe Fig. 4) für einen Randbereich eines Dokumentenkörpers auf. Eine Orientierung der Vertikalrichtung z ist hierbei durch einen Pfeil verdeutlicht.

Insbesondere können die Klemmelemente 2, 3 durch eine Bewegung des weiteren Klemmelements 3 entgegen der in Fig. 1 dargestellten Vertikalrichtung z in eine Freigabestellung bewegt werden. Durch eine Bewegung des weiteren Klemmelements 3 in Vertikalrichtung z können die Klemmelemente 2, 3 in eine Klemmstellung bewegt werden. In der Klemmstellung kann der Dokumentenkörper zwischen den Klemmelementen 2, 3 geklemmt sein. Weiter dargestellt ist eine Längsrichtung x und eine Querrichtung y, wobei die Orientierungen dieser Richtungen x, y durch Pfeile verdeutlicht sind. Die Vertikalrichtung z, die Längsrichtung x und die Querrichtung y sind hierbei jeweils senkrecht zueinander orientiert. Die Längsrichtung x und die Querrichtung y spannen eine Ebene auf, die parallel zu der Auflagefläche des ersten und des weiteren Klemmelements 2, 3 orientiert ist.

Die Richtungen x, y, z können hierbei parallel zu Achsen eines kartesischen Koordinatensystems orientiert sein, welches ortsfest relativ zum ersten Klemmelement 2 angeordnet ist.

Dargestellt ist, dass das erste Klemmelement 2 und das weitere Klemmelement 3 jeweils rahmenförmig ausgebildet sind. So weisen das erste Klemmelement 2 und das weitere Klemmelement 3 jeweils eine Durchgangsöffnung 4 auf. Weiter weisen sowohl das erste Klemmelement 2 als auch das weitere Klemmelement 3 einen Ein- und Ausführabschnitt 5 auf bzw. bilden diesen aus. Der Ein- und Ausführabschnitt 5 jedes Klemmelements 2, 3 ist hierbei U-profilförmig ausgebildet, wobei sich Schenkel des U-profilförmigen Abschnitts in Längsrichtung x von einem Rahmenabschnitt des jeweiligen Klemmelements 2, 3 wegerstreckt. Eine Grundseite des U-profilförmigen Abschnitts wird jeweils von einem Rahmenteilabschnitt der Klemmelemente 2, 3 ausgebildet.

Weiter dargestellt ist, dass das erste Klemmelement 2 Langlöcher 6 aufweist, wobei die Langlöcher 6 in den Schenkeln des Ein- und Ausführabschnitts 5 ausgebildet sind. Diese dienen zur Gewichtsersparnis. Der Ein- und Ausführabschnitt 5 bildet Gleitflächen 18 (siehe Fig. 4), die eine Einführbewegung des Dokumentenkörpers in eine Klemmlage zwischen die Klemmelementen 2, 3 und eine Ausführbewegung aus dieser Klemmlage führen können.

Die Klemmbewegung, also die Bewegung der Klemmelemente 2, 3 in Klemmstellung, ist hierbei eine Linearbewegung. Zur Führung der Klemmbewegung können das erste und das weitere Klemmelemente 2, 3 jeweils korrespondierende Führungselemente oder Führungseinrichtungen aufweisen, z.B. in Form einer Nut-Feder-Anordnung.

Fig. 2 zeigt eine Seitenansicht der in Fig. 1 dargestellten Vorrichtung 1. Dargestellt sind wiederum das erste Klemmelement 2 und das weitere Klemmelement 3. Weiter dargestellt sind bewegliche Koppelelemente 7, insbesondere ein erstes Koppelelement 7a und ein weiteres Koppelelement 7b. Die beweglichen Koppelelemente 7 sind beweglich an dem ersten Klemmelement 2 befestigt.

Die Koppelelemente 7 weisen einen zylinderförmigen Lagerabschnitt 8 auf. Das erste Klemmelement 2 weist einen hohlzylinderförmigen Lagerabschnitt 9 auf. Die Koppelelemente 7 sind hierbei beweglich an dem ersten Klemmelement 2 gelagert, wobei der zylinderförmige Lagerabschnitt 8 in dem hohlzylinderförmigen Lagerabschnitt 9 des ersten Klemmelements 2 angeordnet ist. Hierdurch ergibt sich eine Gleitlagerung der Koppelelemente 7 an dem ersten Klemmelement 2.

Die Koppelelemente sind hierbei in und entgegen der Längsrichtung x beweglich gelagert. Eine Bewegung der Koppelelemente 7 ist hierbei eine Linearbewegung.

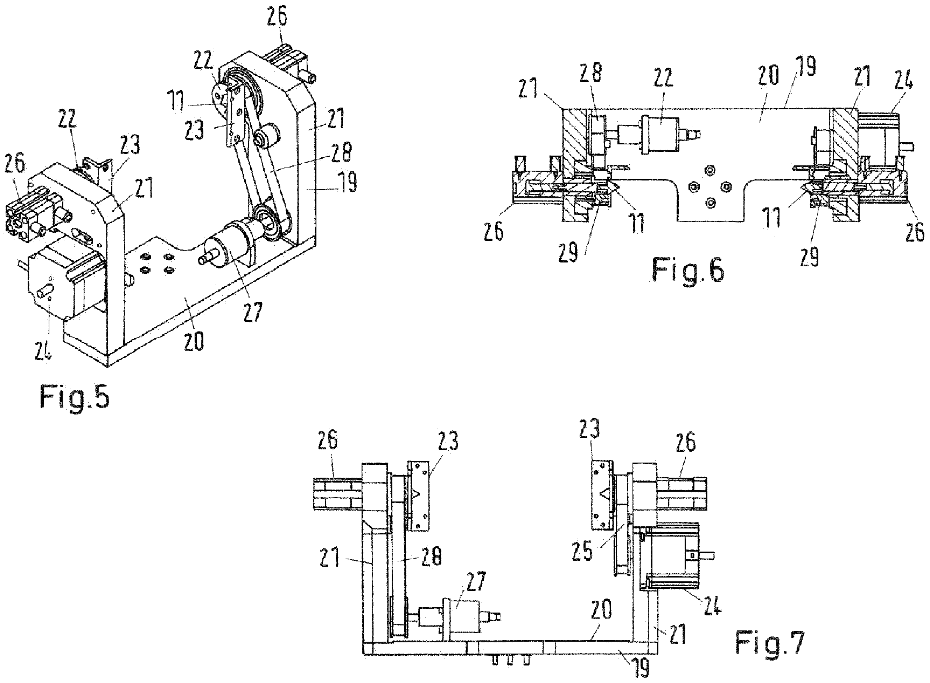

Weiter dargestellt ist, dass ein bewegliches Koppelelement 7 einen Kugellagerabschnitt 10 aufweist. Der Kugellagerabschnitt 10 bildet hierbei einen ersten Betätigungsabschnitt des Koppelelements 7 zur Betätigung durch ein Betätigungselement 11 (siehe Fig. 6). Weiter umfasst ein Koppelelement 7 einen weiteren Betätigungsabschnitt, der als Miniaturlagerabschnitt 12 ausgebildet ist. Hierbei sind der Kugellagerabschnitt 10 und der Miniaturlagerabschnitt 12 über den zylinderförmigen Abschnitt 8 mechanisch starr verbunden.

Das weitere Klemmelement 3 weist einen Betätigungsabschnitt 13 zur Betätigung durch das Koppelelement 7, insbesondere durch den Miniaturlagerabschnitt 12, auf. Dieser Betätigungsabschnitt 13 des weiteren Klemmelements 3 umfasst eine Betätigungsfläche 14. Diese dient als Gleitfläche für den Miniaturlagerabschnitt 12 eines Koppelelements 7. Ein Normalenvektor der Betätigungsfläche 14 für den Miniaturlagerabschnitt 12 des ersten Koppelelements 7a umfasst hierbei einen Anteil, der parallel zur und in Längsrichtung x, also parallel zur Bewegungsrichtung des ersten Koppelelements 7a bei der Bewegung von einer Freigabeposition in eine Klemmposition, orientiert ist. Weiter umfasst der Normalenvektor einen Anteil, der parallel zur und in Vertikalrichtung z orientiert ist, also parallel zur Bewegungsrichtung des weiteren Klemmelements 3 bei der Klemmbewegung. Ein Normalenvektor der Betätigungsfläche 14 für den Miniaturlagerabschnitt 12 des weiteren Koppelelements 7b umfasst hierbei einen Anteil, der parallel zur und entgegen der Längsrichtung x, also parallel zur Bewegungsrichtung des weiteren Koppelelements 7b bei der Bewegung von einer Freigabeposition in eine Klemmposition, orientiert ist. Weiter umfasst der Normalenvektor einen Anteil, der parallel zur und in Vertikalrichtung z orientiert ist, also parallel zur Bewegungsrichtung des weiteren Klemmelements 3 bei der Klemmbewegung. Somit kann die Betätigungsfläche auch als schräge Fläche bezeichnet werden.

Der Betätigungsabschnitt des weiteren Klemmelements 3 kann als dreieck- oder trapezförmige Ausnehmung an einer Unterseite des weiteren Klemmelements 3 ausgebildet sein, wobei eine Querschnittsfläche orthogonal zur Querrichtung y orientiert ist. Eine Unterseite des weiteren Klemmelements 3 kann insbesondere der Seite des Klemmelements 3 entsprechen, welches einem geklemmten Dokumentenkörper zugewandt ist.

In Fig. 2 ist dargestellt, dass sich die Koppelelemente 7 in einer Freigabeposition befinden. In der Freigabeposition bilden die hohlzylinderförmigen Lagerabschnitte 9 des ersten Koppelelements 2 Anschlagelemente für die Kugellagerabschnitte 10 der Koppelelemente 7. Diese liegen in dieser Freigabeposition an den Seitenflächen dieser Anschlagelemente an. Nicht dargestellt ist eine Klemmposition der Koppelelemente 7. In der Klemmposition liegen die Kugellagerabschnitte 10 der Koppelelemente 7 aneinander an. In der Klemmposition können die hohlzylinderförmigen Lagerabschnitte 9 des ersten Koppelelements 2 Anschlagelemente für die Miniaturlagerabschnitte 10 der Koppelelemente 7 bilden. Diese können an einer weiteren Seitenfläche des hohlzylinderförmigen Lagerabschnitts 9 anliegen.

In der Freigabeposition ist aufgrund der Ausbildung des Betätigungsabschnitts 14 des weiteren Klemmelements 3 eine Klemmbewegung der Klemmelemente 2, 3 freigegeben.

Weiter dargestellt sind Federn 15, die zwischen dem ersten Klemmelement 2 und dem weiteren Klemmelement 3 angeordnet sind. Diese Federn 15 sind hierbei derart angeordnet, dass die Federelemente in der dargestellten Freigabestellung der Klemmelemente 2, 3 eine Federkraft zur Bewegung der Klemmelemente 2, 3 in die Klemmstellung auf die Klemmelemente 2, 3 ausüben. Werden Koppelelemente 7 von der dargestellten Freigabeposition in die Klemmposition bewegt (also das erste Koppelelement 7a in Längsrichtung x und das weitere Koppelelement 7b entgegen der Längsrichtung x), so wird diese Klemmbewegung freigegeben und das weitere Klemmelement 3 kann sich entlang der Vertikalrichtung z auf das erste Klemmelement 2 zu und somit in die Klemmstellung bewegen.

Weiter dargestellt ist, dass die Vorrichtung 1 einen Betätigungsabschnitt 16 zur Betätigung durch das Betätigungselement 11 aufweist. Dieser Betätigungsabschnitt 16 wird durch eine im Querschnitt rechteckförmige Ausnehmung an einer Oberseite des ersten Klemmelements 2 und eine im Querschnitt ebenfalls rechteckförmige Ausnehmung an einer Unterseite des weiteren Klemmelements 3 ausgebildet. Die Schnittebene ist hierbei wiederum orthogonal zu Querrichtung y orientiert. In diesen Ausnehmungen 2, 3 sind die Kugellagerabschnitte 10 der Koppelelemente angeordnet. Der Betätigungsabschnitt 16 ist hierbei zur Längsseite der Klemmelemente 2, 3 hin nach außen geöffnet. Somit kann ein Betätigungselement 11, insbesondere von außen, in den Betätigungsabschnitt 16 eingeführt werden.

Wird das Betätigungselement 11 in den Betätigungsabschnitt 16 eingeführt, so werden die Kugellagerabschnitte 10 der Koppelelemente 7 durch das Betätigungselement betätigt und können von der Klemmposition in die Freigabeposition bewegt werden (also das erste Koppelelement 7a entgegen der Längsrichtung x und das weitere Koppelelement 7b in Längsrichtung x), insbesondere da eine entsprechende Kraftübertragung von dem Betätigungselement 11 über die Kugellagerabschnitte 10 auf das Koppelelement 7 ausgeübt werden kann. Aufgrund der Kugellagerabschnitte 10 kann das Betätigungselement 11 hierbei gut an dem Koppelelement 7 entlang gleiten.

Aufgrund der starren Kopplung zwischen den Kugellagerabschnitten 10 und den Miniaturlagerabschnitten 12 wird diese Bewegung in eine Bewegung der Miniaturlagerabschnitte 12 übersetzt. Bei dieser Bewegung der Miniaturlagerabschnitte 12 gleiten diese entlang der schrägen Betätigungsfläche 14 und übertragen hierbei eine Kraft auf das weitere Klemmelement 3, die zu einer Freigabebewegung, also einer Bewegung des weiteren Klemmelements 3 entgegen der Vertikalrichtung z, führt. Hierdurch können also die Klemmelemente 2, 3 von der Klemmstellung in die Freigabestellung versetzt werden.

Fig. 3 zeigt einen Querschnitt durch das erste Klemmelement 2. Dargestellt ist, dass vier Koppelelemente 7 an dem ersten Klemmelement 2 beweglich gelagert sind, insbesondere an Längsseiten des Klemmelements 2. Ebenfalls dargestellt sind die Kugellagerabschnitte 10 der Koppelelemente 7 sowie die Miniaturlagerabschnitte 12 der Koppelelemente 7. Ebenfalls dargestellt ist der Verbindungszapfen, also der zylinderförmige Lagerabschnitt 8 der Koppelelemente 7, der jeweils die Kugellagerabschnitte 10 und die Miniaturlagerabschnitte 12 verbindet. Ebenfalls im Querschnitt ersichtlich ist der hohlzylinderförmig ausgebildete Lagerabschnitt 9 des ersten Klemmelements 2, in dem die Zapfen gelagert sind.

Weiter kann das erste Klemmelement 2 Federelemente (nicht dargestellt) umfassen, die zwischen einem Kugellagerabschnitt 10 eines Koppelelements 7 und dem hohlzylinderförmigen Lagerabschnitt 9 angeordnet sind, welcher den zylinderförmigen Lagerabschnitt 8 des Koppelelements 7 lagert. Diese können derart angeordnet sein, dass durch die Federelemente zumindest in der Freigabeposition, die ebenfalls in Fig. 3 dargestellt ist, eine Kraft auf die Kugellagerabschnitte 10 und somit auf das Koppelelement 7 ausgeübt wird, die eine Bewegung von der Freigabeposition der Koppelelemente 7 in die Klemmposition der Koppelelemente 7 bewirkt.

Fig. 4 zeigt eine Draufsicht auf die Vorrichtung 1, wobei einige Bereiche des ersten Klemmelements 2, die unter dem weiteren Klemmelement 3 angeordnet sind, freigeschnitten sind. Dargestellt sind insbesondere Auflageflächen 17 des ersten Klemmelements 2 für einen Randbereich eines rechteckförmigen Dokumentenkörpers. Ebenfalls dargestellt sind Gleitflächen 18 des ersten Klemmelements 2, insbesondere des Ein- und Ausführabschnitts des ersten Klemmelements 2. Ebenfalls ersichtlich sind die Kugellagerabschnitte 10 der Koppelelemente 7 sowie die Miniaturlagerabschnitte 12.

Fig. 5 zeigt eine perspektivische Ansicht einer Haltevorrichtung für die Klemmelemente 2, 3 (siehe Fig. 1). Die Klemmelemente 2, 3 können drehbar an der Halteeinrichtung 19 gelagert werden. Hierbei umfasst die Haltevorrichtung 19 eine Bodenfläche 20 und zwei Halteschenkel 21, die sich senkrecht von der Bodenfläche 20 weg erstrecken. An oberen Enden der Halteschenkel 21 sind Kugellagerabschnitte 22 angeordnet, wobei über die Kugellagerabschnitte 22 Befestigungsprofilelemente 23 drehbar an den Halteschenkeln 21 befestigt sind. Über die Befestigungsprofilelemente 23 können die Klemmelemente 2, 3, insbesondere das erste Klemmelement 2, an der Halteeinrichtung 19 drehbar befestigt werden, insbesondere indem sie an die Befestigungsprofilelemente 23 geschraubt werden.

Weiter dargestellt ist, dass an der Halteeinrichtung 19, insbesondere an einem Halteschenkel 21, eine Antriebseinrichtung 24, beispielsweise ein Servomotor, befestigt ist, wobei der Servomotor 24 über einen Riemen 25 (siehe Fig. 7) mit einer drehbar gelagerten Riemenscheibe (nicht dargestellt) gekoppelt ist. Der Riemen 25 kann hierbei als Zahnriemen oder als Keilriemen ausgebildet sein. Die Riemenscheibe kann entsprechend als Zahnriemenscheibe oder Keilriemenscheibe ausgebildet sein.

Die Riemenscheibe wiederum ist mit dem drehbaren Teil eines Kugellagerabschnitts 22 verbunden. Somit kann eine Rotationsbewegung einer Abtriebswelle der Antriebseinrichtung 24 in eine Rotationsbewegung der Riemenscheibe und somit eines Befestigungsprofilelements 23 übersetzt werden.

Weiter sind Betätigungselemente 11 (wobei nur ein Betätigungselement 11 in Fig. 5 erkennbar ist) drehbar an der Halteeinrichtung 19 gelagert, insbesondere über einen weiteren Kugellagerabschnitt. Hierbei ist eine Drehachse für die Drehbewegung der Betätigungselemente 11 gleich einer Drehachse der Drehbewegung der Klemmelemente 2, 3, wenn diese an der Halteeinrichtung 19 befestigt sind.

Weiter dargestellt ist, dass Antriebseinrichtungen 26 an der Halteeinrichtung 19, insbesondere an den Halteschenkeln 21, befestigt sind. Diese Antriebseinrichtungen 26 können pneumatische Antriebseinrichtungen sein. Die Antriebseinrichtungen 26 dienen zur Erzeugung einer Antriebskraft für das Betätigungselement 11.

Sind die Klemmelemente 2, 3 an der Halteeinrichtung 19 befestigt, so sind Klemmelemente 2, 3 derart relativ zu den Betätigungselementen 11 angeordnet, dass diese Betätigungselemente 11 in die Betätigungsabschnitte 16 der Vorrichtung 1 eingeführt bzw. aus den Betätigungsabschnitten 16 ausgeführt werden können. Aufgrund der Anordnung können die Betätigungselemente 11 entlang der Drehachse der Klemmelemente 2, 3 bewegt werden. Hierbei kann insbesondere die Antriebskraft für die Bewegung in die Betätigungsabschnitte 16 hinein (Betätigungsbewegung) von den Antriebseinrichtungen 26 erzeugt werden.

Weiter ist es möglich, die Antriebseinrichtungen 26 kraftlos zu schalten, insbesondere durch Öffnen eines Ventils eines Druckluftzylinders der Antriebseinrichtungen 26. Dies kann insbesondere dann erfolgen, wenn die Betätigungselemente 11 aus den Betätigungsabschnitten 16 herausbewegt werden sollen. Werden die Antriebseinrichtungen 26 z.B. dann kraftlos geschaltet, wenn sich die Betätigungselemente 11 in den Betätigungsabschnitten 16 befinden und somit die Koppelelemente 7 in die Freigabeposition drücken, so wird, wie vorhergehend erläutert, aufgrund der Federkräfte das weitere Klemmelement 3 auf das erste Klemmelement zu und die Klemmelemente 2, 3 in die Klemmstellung bewegt, wodurch auch die Koppelelemente 7 in die Klemmposition bewegt werden. Hierbei üben die Koppelelemente 7 eine Kraft derart auf die Betätigungselemente 11 aus, dass dieses aus den Betätigungsabschnitten 16 herausgedrückt wird.

Durch den Antrieb der Betätigungselemente 11 durch die Antriebseinrichtungen 26 kann ein Freigabezustand eingestellt werden. Weiter kann durch das Kraftlosschalten der Antriebseinrichtungen 26 ein Klemmzustand eingestellt werden. Diese Einstellung kann in jeder Drehlage der Klemmelemente 2, 3 erfolgen, ohne dass eine aufwendige Bewegungsführung der Betätigungselemente 11 erforderlich ist, insbesondere ein Nachführen der Betätigungselemente 11 bei einer Drehbewegung der Klemmelemente 2, 3.

Fig. 5 zeigt weiter einen Winkelpositionssensor 27, der ebenfalls über einen Riemen 28 mit einer Riemenscheibe (nicht dargestellt) gekoppelt ist. Die Riemenscheibe wiederum ist mit dem drehbaren Teil eines Kugellagerabschnitts 22 verbunden. Somit kann eine Rotationsbewegung der an den Befestigungsprofilelementen 23 befestigten Klemmelemente 2, 3 in eine Rotationsbewegung der Riemenscheibe und somit einer Antriebsachse des Winkelpositionssensors 27 übersetzt werden. Über den Drehwinkelpositionssensor 27 kann eine aktuelle Drehposition der Klemmelemente 2, 3 erfasst werden.

Fig. 6 zeigt einen Querschnitt durch die in Fig. 5 dargestellte Halteeinrichtung 19. Insbesondere dargestellt sind die Betätigungselemente 11, die als Stößel ausgebildet sind. Hierbei weist ein vorderer Abschnitt der Stößel, also ein den Klemmelementen 2, 3 zugewandter Abschnitt, einen sich verjüngenden Durchmesser auf. Insbesondere verjüngt sich ein Durchmesser hin zu den Klemmelementen 2, 3, wenn diese an der Halteeinrichtung 19 befestigt sind.

Weiter weist die Halteeinrichtung 19 eine Lagereinrichtung 29 für die Betätigungselemente 11 auf. Dieses kann beispielsweise als Linearlager ausgebildet sein. Die Lagereinrichtung 29 kann hierbei mehrere Teillagereinrichtungen umfassen, die mehrere Abschnitte eines Betätigungselements 11 lagern.

Somit sind die Betätigungselemente 11 beweglich an der Halteeinrichtung 19, insbesondere an den Halteschenkeln 21, gelagert. Die Betätigungselemente 11 können hierbei drehbar gelagert sein, wobei die drehbar gelagerten Betätigungselemente über eine Abtriebswelle der Antriebseinrichtungen 26 linear bewegt werden können.

Fig. 7 zeigt eine Seitenansicht der in Fig. 5 dargestellten Halteeinrichtung 19 mit der Bodenplatte 20 und den Halteschenkeln 21.

### Bezugszeichenliste

- 1: Vorrichtung
- 2: erstes Klemmelement
- 3: weiteres Klemmelement
- 4: Durchgangsöffnung
- 5: Ein- und Ausführabschnitt
- 6: Langloch
- 7: Koppelelement
- 7a: erstes Koppelelement
- 7b: weiteres Koppelelement
- 8: zylinderförmiger Lagerabschnitt
- 9: hohlzylinderförmiger Lagerabschnitt
- 10: Kugellagerabschnitt
- 11: Betätigungselement
- 12: Miniaturlagerabschnitt
- 13: Betätigungsabschnitt des weiteren Klemmelements
- 14: Betätigungsfläche
- 15: Feder
- 16: Betätigungsabschnitt der Vorrichtung
- 17: Auflagefläche
- 18: Gleitfläche
- 19: Halteeinrichtung
- 20: Bodenplatte
- 21: Halteschenkel
- 22: Kugellager
- 23: Befestigungsprofilelement
- 24: Antriebseinrichtung
- 25: Riemen
- 26: Antriebseinrichtung
- 27: Drehpositionssensor
- 28: Riemen
- 29: Lagereinrichtung

## Patentansprüche

1. Vorrichtung zur Aufnahme eine Dokumentenkörpers, wobei die Vorrichtung (1) ein erstes Klemmelement (2) und ein weiteres Klemmelement (3) aufweist, wobei das erste und/oder das weitere Klemmelement (2, 3) mindestens eine Auflagefläche (17) für den Dokumentenkörper aufweist, wobei das erste und das weitere Klemmelement (2, 3) beweglich aneinander befestigt sind, wobei die Bewegung der Klemmelemente (2, 3) relativ zueinander ist eine Linearbewegung ist, wobei das erste und das weitere Klemmelement (2, 3) in eine Klemmstellung und in eine Freigabestellung bewegbar sind, wobei mindestens ein bewegliches Koppelelement (7) beweglich an dem ersten Klemmelement (2) befestigt ist, wobei das bewegliche Koppelelement (7) von einer ersten Position in eine weitere Position bewegbar ist,
**dadurch gekennzeichnet**, das das erste und das weitere Klemmelement (2, 3) derart gekoppelt sind, dass die Klemmelemente (2, 3) in einer Freigabebewegung von der Klemmstellung in die Freigabestellung bewegt werden, wenn das Koppelelement (7) von der ersten Position in die weitere Position bewegt wird, wobei die Freigabebewegung durch die Bewegung des Koppelelements (7) bewirkt wird.

2. Vorrichtung nach Anspruch 1, **dadurch gekennzeichnet, dass** mindestens ein Federelement (15) an einem der Klemmelemente (2, 3) befestigt ist, wobei das Federelement (15) in der Freigabestellung eine Federkraft zur Bewegung der Klemmelemente (2, 3) in die Klemmstellung auf die Klemmelemente (2, 3) ausübt.

3. Vorrichtung nach einem der Ansprüche 1 oder 2, **dadurch gekennzeichnet, dass** die Vorrichtung (1) mindestens einen Betätigungsabschnitt (16) zur Betätigung des Koppelelements (7) durch ein Betätigungselement (11) aufweist, wobei das Koppelelement (7) durch eine Betätigung von der ersten Position in die weitere Position bewegbar ist, wobei bei der Betätigung eine Kraftübertragung von dem Betätigungselement (11) auf das Koppelelement (7) erfolgt.

4. Vorrichtung nach einem der Ansprüche 1 bis 3, **dadurch gekennzeichnet, dass** das Koppelelement (7) einen ersten Betätigungsabschnitt zur Betätigung durch ein Betätigungselement (11) aufweist oder ausbildet, wobei bei der Betätigung des Koppelelements (7) eine Kraftübertragung von dem Betätigungselement (11) auf das Koppelelement (7) erfolgt, wobei das Koppelelement (7) mindestens einen weiteren Betätigungsabschnitt zur Betätigung des weiteren Klemmelements (3) aufweist oder ausbildet, wobei bei der Betätigung des weiteren Klemmelements (3) eine Kraftübertragung von dem Koppelelement (7) auf das weitere Klemmelement (3) erfolgt.

5. Vorrichtung nach einem der vorangegangenen Ansprüche, **dadurch gekennzeichnet, dass** das weitere Klemmelement (3) einen Betätigungsabschnitt (13) zur Betätigung durch das Koppelelement (7) aufweist oder ausbildet, wobei der Betätigungsabschnitt (13) eine Fläche (14) umfasst, deren Normalenvektor einen Anteil, der parallel zur Bewegungsrichtung des Koppelelements (7) orientiert ist, und einen Anteil, der parallel zur Bewegungsrichtung der Klemmelemente (2, 3) orientiert ist, aufweist.

6. Vorrichtung nach einem der vorangegangenen Ansprüche, **dadurch gekennzeichnet, dass** das erste Klemmelement (2) und/oder das weitere Klemmelement (3) einen Rahmenabschnitt aufweisen oder ausbilden, wobei der Rahmenabschnitt eine Durchgangsöffnung (4) aufweist, wobei ein durch die Klemmelemente (2, 3) geklemmter Dokumentenkörper im geklemmten Zustand von außen durch die Durchgangsöffnung (4) zugänglich ist.

7. Vorrichtung nach einem der vorangegangenen Ansprüche, **dadurch gekennzeichnet, dass** das erste Klemmelement (2) und/oder das weitere Klemmelement (3) einen Einführabschnitt (5) zur Einführung eines Dokumentenkörpers in eine Klemmlage und einen Ausführabschnitt (5) zum Ausführen des Dokumentenkörpers aus der Klemmlage aufweisen oder ausbilden.

8. Vorrichtung nach einem der vorangegangen Ansprüche, **dadurch gekennzeichnet, dass** die Vorrichtung (1) mindestens ein bewegliches Betätigungselement (11) umfasst, wobei durch eine Betätigungsbewegung des Betätigungselements (11) das Koppelelement (7) betätigbar ist.

9. Vorrichtung nach Anspruch 8, **dadurch gekennzeichnet, dass** das Betätigungselement (11) zumindest einen sich verjüngenden Abschnitt aufweist oder ausbildet.

10. Vorrichtung nach einem der vorangegangen Ansprüche, **dadurch gekennzeichnet, dass** die Vorrichtung (1) eine Halteeinrichtung (19) für die Klemmelemente (2, 3) umfasst, wobei die Klemmelemente (2, 3) drehbar an der Halteeinrichtung (19) gelagert sind.

11. Vorrichtung nach Anspruch 10, **dadurch gekennzeichnet, dass** die Klemmelemente (2, 3) derart an der Halteeinrichtung (19) befestigt sind, dass eine durch den Betätigungsabschnitt (16) festgelegte Betätigungstrajektorie konzentrisch zur Rotationsachse der Klemmelemente (2, 3) verläuft.

12. Vorrichtung nach einem der Ansprüche 10 bis 11, **dadurch gekennzeichnet, dass** die Vorrichtung (1) eine weitere Halteeinrichtung umfasst, wobei die Halteeinrichtung (19) zur Halterung der Klemmelemente (2, 3) drehbar an der weiteren Halteeinrichtung gelagert ist.

13. Verfahren zur Klemmung oder Freigabe eines Dokumentenkörpers mittels einer Vorrichtung (1) gemäß einer der Ansprüche 1 bis 12, **dadurch gekennzeichnet, dass** das Koppelelement (7) von der ersten Position in die weitere Position bewegt wird, um die Klemmelemente (2, 3) in eine Freigabestellung zu versetzen oder dass das Koppelelement (7) von der weiteren Position in die erste Position bewegt wird, um die Klemmelemente (2, 3) in eine Klemmstellung zu versetzen.

14. Verfahren nach Anspruch 13, **dadurch gekennzeichnet, dass** das Koppelelement (7) durch Betätigung durch ein Betätigungselement (11) von der ersten Position in die weitere Position bewegt wird.

15. Verfahren nach Anspruch 14, **dadurch gekennzeichnet, dass** das Betätigungselement (11) entlang einer Betätigungstrajektorie bewegt wird, wobei das Betätigungselement (11) bei der Bewegung entlang der Bewegungstrajektorie das Koppelelement (7) betätigt.

## Claims

1. Device for holding a document body, wherein the device (1) comprises a first clamping element (2) and a further clamping element (3), wherein the first and/or the further clamping element (2, 3) comprises at least one resting surface (17) for the document body, wherein the first and the further clamping elements (2, 3) are movably fastened to one another, wherein the movement of the clamping elements (2, 3) relative to one another is a linear movement, wherein the first and the further clamping elements (2, 3) can be moved into a clamping position and into a release position, wherein at least one movable coupling element (7) is movably fastened to the first clamping element (2), wherein the movable coupling element (7) can be moved from a first position into a further position,
**characterised in that** the first and the further clamping element (2, 3) are coupled in such a way that the clamping elements (2, 3) are moved in a release movement from the clamping position into the release position when the coupling element (7) is moved from the first position into the further position, wherein the release movement is put into effect by the movement of the coupling element (7).

2. Device according to claim 1, **characterised in that** at least one spring element (15) is fastened to one of the clamping elements (2, 3), wherein the spring element (15) in the release position exerts a spring force on the clamping elements (2, 3) to move the clamping elements (2, 3) into the clamping position.

3. Device according to claim 1 or 2, **characterised in that** the device (1) comprises at least one actuation section (16) for actuating the coupling element (7) by means of an actuating element (11), wherein the coupling element (7) can be moved by means of an actuation from the first position into the further position, wherein, during the actuation, a transfer of force takes place from the actuating element (11) onto the coupling element (7).

4. Device according to any one of claims 1 to 3, **characterised in that** the coupling element (7) comprises or forms a first actuating section for actuating by means of an actuating element (11), wherein, at the actuation of the coupling element (7), a transfer of force takes place from the actuating element (11) onto the coupling element (7), wherein the coupling element (7) comprises or forms at least one further actuating section for the actuation of the further clamping element (3), wherein, during the actuation of the further clamping element (3), a transfer of force takes place from the coupling element (7) onto the further clamping element (3).

5. Device according to any one of the preceding claims, **characterised in that** the further clamping element (3) comprises or forms an actuating section (13) for the actuation by the coupling element (7), wherein the actuating section (13) comprises a surface (14), of which the normal vector comprises one portion which is oriented parallel to the direction of movement of the coupling element (7), and one portion which is oriented parallel to the direction of movement of the clamping elements (2, 3).

6. Device according to any one of the preceding claims, **characterised in that** the first clamping element (2) and/or the further clamping element (3) comprise or form a frame section, wherein the frame section has a passage opening (4), wherein a document body clamped by the clamping elements (2, 3) in the clamped state is accessible from the outside through the passage opening (4).

7. Device according to any one of the preceding claims, **characterised in that** the first clamping element (2) and/or the further clamping element (3) comprise or form an introduction section (5) for introducing a document body into a clamping posture and an extraction section (5) for extracting the document body from the clamping posture.

8. Device according to any one of the preceding claims, **characterised in that** the device (1) comprises at least one movable actuating element (11), wherein, by means of an actuation movement of the actuating element (11), the coupling element (7) can be actuated.

9. Device according to claim 8, **characterised in that** the actuating element (11) comprises or forms at least one tapering section.

10. Device according to any one of the preceding claims, **characterised in that** the device (1) comprises a holding device (19) for the clamping elements (2, 3), wherein the clamping elements (2, 3) are mounted onto the holding device (19) in a rotatable manner.

11. Device according to claim 10, **characterised in that** the clamping elements (2, 3) are fastened to the holding device (19) in such a way that an actuation trajectory secured by the actuating section (16) runs concentrically to the axis of rotation of the clamping elements (2, 3).

12. Device according to any one of claims 10 or 11, **characterised in that** the device (1) comprises a further holding device, wherein the holding device (19) for holding the clamping elements (2, 3) is mounted onto the further holding device in a rotatable manner.

13. Method for clamping or releasing a document body by means of a device (1) according to any one of claims 1 to 12, **characterised in that** the coupling element (7) is moved from the first position into the further position in order to move the clamping elements (2, 3) into a release position, or that the coupling element (7) is moved from the further position into the first position in order to move the clamping elements (2, 3) into a clamping position.

14. Method according to claim 13, **characterised in that** the coupling element (7) is moved by actuation by an actuating element (11) from the first position into the further position.

15. Method according to claim 14, **characterised in that** the actuating element (11) is moved along an actuation trajectory, wherein the actuating element (11) actuates the coupling element (7) during the movement along the movement trajectory.

## Revendications

1. Dispositif pour recevoir un corps de document, dans lequel le dispositif (1) présente un premier élément de serrage (2) et un autre élément de serrage (3), dans lequel le premier et/ou l'autre élément de serrage (2, 3) présentent au moins une surface d'appui (17) pour le corps de document, dans lequel le premier et l'autre élément de serrage (2, 3) sont fixés l'un à l'autre de manière mobile, dans lequel le déplacement des éléments de serrage (2, 3) l'un par rapport à l'autre est un déplacement linéaire, dans lequel le premier et l'autre élément de serrage (2, 3) peuvent être déplacés dans une position de serrage et dans une position de desserrage, dans lequel au moins un élément de couplage (7) mobile est fixé de manière mobile au premier élément de serrage (2), dans lequel l'élément de couplage (7) mobile peut être déplacé depuis une première position dans une autre position,
**caractérisé en ce que** le premier et l'autre élément de serrage (2, 3) sont couplés de telle manière que les éléments de serrage (2, 3) sont déplacés en un déplacement de desserrage depuis la position de serrage dans la position de desserrage quand l'élément de couplage (7) est déplacé depuis la première position dans l'autre position, dans lequel le déplacement de desserrage est provoqué par le déplacement de l'élément de couplage (7).

2. Dispositif selon la revendication 1, **caractérisé en ce qu'**au moins un élément de ressort (15) est fixé à un des éléments de serrage (2, 3), dans lequel l'élément de ressort (15) exerce dans la position de desserrage une force de ressort pour déplacer les éléments de serrage (2, 3) dans la position de serrage sur les éléments de serrage (2, 3) .

3. Dispositif selon l'une quelconque des revendications 1 ou 2, **caractérisé en ce que** le dispositif (1) présente au moins une section d'actionnement (16) pour actionner l'élément de couplage (7) par un élément d'actionnement (11), dans lequel l'élément de couplage (7) peut être déplacé par un actionnement depuis la première position dans l'autre position, dans lequel lors de l'actionnement, une transmission de force est effectuée depuis l'élément d'actionnement (11) sur l'élément de couplage (7).

4. Dispositif selon l'une quelconque des revendications 1 à 3, **caractérisé en ce que** l'élément de couplage (7) présente ou réalise une première section d'actionnement pour l'actionnement par un élément d'actionnement (11), dans lequel lors de l'actionnement de l'élément de couplage (7), une transmission de force est effectuée depuis l'élément d'actionnement (11) sur l'élément de couplage (7), dans lequel l'élément de couplage (7) présente ou réalise au moins une autre section d'actionnement pour actionner l'autre élément de serrage (3), dans lequel lors de l'actionnement de l'autre élément de serrage (3), une transmission de force est effectuée depuis l'élément de couplage (7) sur l'autre élément de serrage (3).

5. Dispositif selon l'une quelconque des revendications précédentes, **caractérisé en ce que** l'autre élément de serrage (3) présente ou réalise une section d'actionnement (13) pour l'actionnement par l'élément de couplage (7), dans lequel la section d'actionnement (13) comprend une surface (14), dont le vecteur de normal présente une fraction, qui est orientée parallèlement au sens de déplacement de l'élément de couplage (7), et une fraction, qui est orientée parallèlement au sens de déplacement des éléments de serrage (2, 3).

6. Dispositif selon l'une quelconque des revendications précédentes, **caractérisé en ce que** le premier élément de serrage (2) et/ou l'autre élément de serrage (3) présentent ou réalisent une section de cadre, dans lequel la section de cadre présente une ouverture de passage (4), dans lequel un corps de document serré par les éléments de serrage (2, 3) est accessible dans l'état serré depuis l'extérieur par l'ouverture de passage (4).

7. Dispositif selon l'une quelconque des revendications précédentes, **caractérisé en ce que** le premier élément de serrage (2) et/ou l'autre élément de serrage (3) présentent ou réalisent une section d'introduction (5) pour l'introduction d'un corps de document dans une position de serrage et une section de sortie (5) pour la sortie du corps de document hors de la position de serrage.

8. Dispositif selon l'une quelconque des revendications précédentes, **caractérisé en ce que** le dispositif (1) comprend au moins un élément d'actionnement (11) mobile, dans lequel l'élément de couplage (7) peut être actionné par un déplacement d'actionnement de l'élément d'actionnement (11).

9. Dispositif selon la revendication 8, **caractérisé en ce que** l'élément d'actionnement (11) présente ou réalise au moins une section se rétrécissant.

10. Dispositif selon l'une quelconque des revendications précédentes, **caractérisé en ce que** le dispositif (1) comprend un système de retenue (19) pour les éléments de serrage (2, 3), dans lequel les éléments de serrage (2, 3) sont montés de manière à pouvoir tourner sur le système de maintien (19).

11. Dispositif selon la revendication 10, **caractérisé en ce que** les éléments de serrage (2, 3) sont fixés de telle manière au système de retenue (19) qu'une trajectoire d'actionnement fixée par la section d'actionnement (16) s'étend de manière concentrique par rapport à l'axe de rotation des éléments de serrage (2, 3).

12. Dispositif selon l'une quelconque des revendications 10 à 11, **caractérisé en ce que** le dispositif (1) comprend un autre système de retenue, dans lequel le système de retenue (19) pour retenir les éléments de serrage (2, 3) est monté de manière à pouvoir tourner sur l'autre système de retenue.

13. Procédé pour serrer ou desserrer un corps de document au moyen d'un dispositif (1) selon l'une quelconque des revendications 1 à 12, **caractérisé en ce que** l'élément de couplage (7) est déplacé depuis la première position dans l'autre position pour amener les éléments de serrage (2, 3) dans une position de desserrage ou que l'élément de couplage (7) est déplacé depuis l'autre position dans la première position pour amener les éléments de serrage (2, 3) dans une position de serrage.

14. Procédé selon la revendication 13, **caractérisé en ce que** l'élément de couplage (7) est déplacé par l'actionnement par un élément d'actionnement (11) depuis la première position dans l'autre position.

15. Procédé selon la revendication 14, **caractérisé en ce que** l'élément d'actionnement (11) est déplacé le long d'une trajectoire d'actionnement, dans lequel l'élément d'actionnement (11) actionne l'élément de couplage (7) lors du déplacement le long de la trajectoire de déplacement.
